# EUROPÄISCHE PATENTSCHRIFT

(11) **EP 0 776 460 B1**
(45) Veröffentlichungstag und Bekanntmachung des Hinweises auf die Patenterteilung: **28.11.2001**
(21) Anmeldenummer: 95926840.0
(22) Anmeldetag: 03.08.1995
(51) Int. Cl.: G01C 21/20, G08G 1/09, H04H 1/00

(54) **VERFAHREN ZUR EINGABE EINER RICHTUNGSINFORMATION**
METHOD OF INPUTTING DIRECTION DATA
PROCEDE D'INTRODUCTION DE DONNEES DE DIRECTION

(30) Priorität: 16.08.1994 DE 4428928
(43) Veröffentlichungstag der Anmeldung: 04.06.1997
(73) Patentinhaber: ROBERT BOSCH GMBH, 70442 Stuttgart (DE)
(72) Erfinder: SIEGLE, Gert, D-31137 Hildesheim (DE)
(86) Internationale Anmeldenummer: DE9501009
(87) Internationale Veröffentlichungsnummer: WO9605481

(56) Entgegenhaltungen:
- EP-A- 0 586 897
- DE-A- 2 061 876
- DE-A- 4 230 912

## Beschreibung

### Stand der Technik

Die Erfindung geht aus von einem Verfahren nach der Gattung des Hauptanspruchs. Es ist aus der Offenlegungsschrift DE-OS 42 30 912.3-53 ein Verfahren bekannt, bei dem mittels einer Ziffernblocktastatur Städtenamen in ein Rundfunkgerät mit Recheneinheit und Speicher eingegeben werden. Dabei werden jeder Taste der Ziffernblocktastatur, die mit der Recheneinheit mit Speicher verbunden ist, mehrere Buchstaben zugeordnet. Eine Richtungseingabe wird eingegeben, indem ein Standort und ein Zielort mit Namen eingegeben wird. Da die Eingabe mehrdeutig sein kann, sucht die Recheneinheit im Speicher nach den in Frage kommenden Städten und gibt diese zur weiteren Auswahl aus.

### Vorteile der Erfindung

Das erfindungsgemäße Verfahren mit den Merkmalen des Hauptanspruchs hat demgegenüber den Vorteil, daß den Tasten einer Ziffernblocktastatur Himmelsrichtungen zugeordnet werden und durch Betätigen der entsprechenden Tasten eine Richtungsinformation eingegeben werden kann. Auf diese Weise wird keine zusätzliche Eingabeeinheit benötigt. Der Aufbau der Ziffernblocktastatur bietet den Vorteil, die Himmelsrichtungen entsprechend einer Landkarte den Tasten der ziffernblocktastatur zuordnen zu können. Dadurch wird ein einfaches und durch die Analogie zu der Verwendung der Himmelsrichtungen bei Landkarten leicht verständliches Eingabeverfahren ermöglicht.

Durch die in den Unteransprüchen aufgeführten Maßnahmen sind vorteilhafte Weiterbildungen und Verbesserungen des im Hauptanspruch angegebenen Verfahrens möglich. Es ist besonders vorteilhaft, eine Sondertaste zu betätigen, um den Standort des Fahrzeuges bestimmen zu lassen. Die Verwendung einer Sondertaste ermöglicht ein einfaches Bedienen des Eingabeverfahrens.

Eine besondere Ausgestaltung des Verfahrens wird dadurch erreicht, daß der zweiten Taste 2 der ersten Reihe, der dritten Taste 6 der zweiten Reihe, der zweiten Taste 8 der dritten Reihe und der ersten Taste 4 der zweiten Reihe der Ziffernblocktastatur, die an die Taste 5 angrenzen, die Himmelsrichtungen Nord, Ost, Süd und West zugeordnet werden. Diese Zuordnung der Himmelsrichtungen in Analogie zu Landkarten ermöglicht dem Fahrer eine intuitive Benutzung der Ziffernblocktastatur zur Eingabe der Richtungsinformation, ohne einen aufwendigen Code benutzen zu müssen.

Die Eingabe mehrerer festgelegter Reichweiten durch ein- bzw. mehrmaliges Betätigen der entsprechenden Taste ermöglicht es, eine präzisere Richtungsinformation auf einfache Weise einzugeben.

Eine vorteilhafte Präzisierung des Eingabeverfahrens wird erreicht, indem der ersten und der dritten Taste 1,3 der ersten Reihe und der dritten und der ersten Taste 9,7 der dritten Reihe der Ziffernblocktastatur die Richtungsinformationen Nord-West, Nord-Ost, Süd-Ost und Süd-West zugeordnet werden. Dadurch wird die Richtungseingabe noch präziser möglich. Die verwendete Belegung der Tasten der Ziffernblocktastatur entspricht der Richtungsangabe bei Landkarten und ist so für den Benutzer intuitiv zu bedienen.

Eine weitere vorteilhafte Ausgestaltung des Verfahrens besteht darin, der zweiten Taste 5 der zweiten Reihe der Ziffernblocktastatur, die mit der Ziffer 5 belegt ist, als Sondertaste z.B. zur Standortbestimmung zu verwenden.

Damit wird die zweite Taste 5 der zweiten Reihe als zentrale Taste bei der Eingabe vom Benutzer empfunden und die Zuordnung der angrenzenden Tasten zu den Himmelsrichtungen ist für den Benutzer intuitiv nachvollziehbar.

### Zeichnung

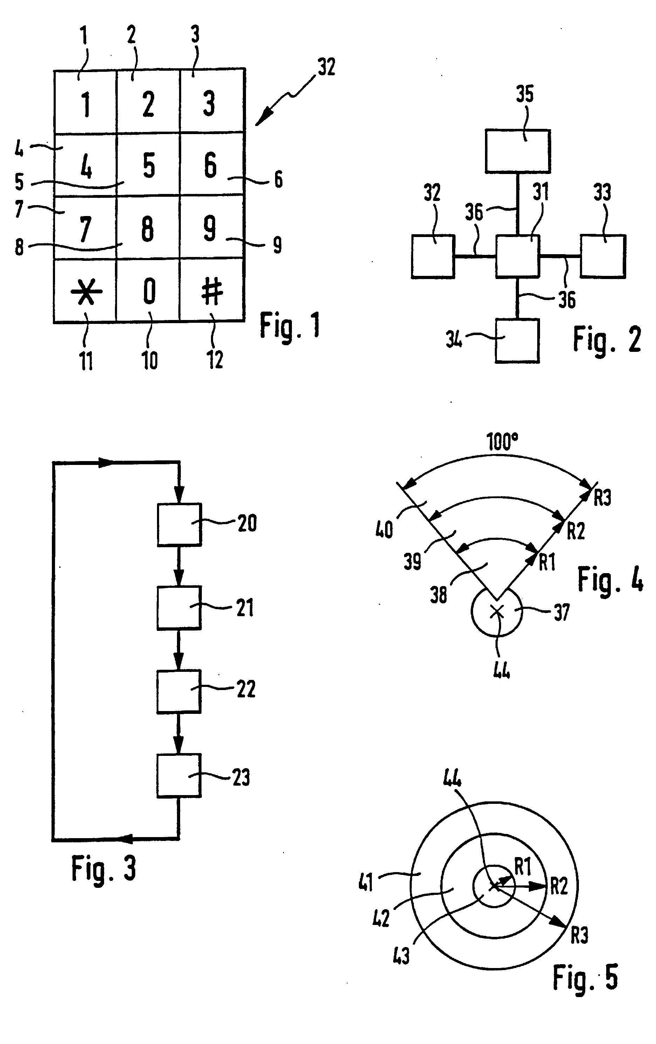

Ein Ausführungsbeispiel der Erfindung ist in der Zeichnung dargestellt und in der nachfolgenden Beschreibung erläutert. Es zeigen Figur 1 eine Ziffernblocktastatur, Figur 3 ein Ablaufdiagramm des Verfahrens, Figur 2 zeigt ein Empfangsgerät, Figur 4 einen Richtungsfächer und Figur 5 Richtungskreise.

### Beschreibung des Ausführungsbeispiels

In Figur 1 ist eine Ziffernblocktastatur 32 angeordnet, wie sie üblicherweise bei Rundfunkgeräten, Telefonapparaten und Navigationsgeräten verwendet wird. Die Ziffernblocktastatur 32 ist in vier Reihen und drei Spalten eingeteilt. Dabei ist die erste Taste 1 der ersten Reihe mit der Ziffer 1, die zweite Taste 2 der ersten Reihe mit der Ziffer 2 und die dritte Taste 3 mit der Ziffer 3 belegt. Die erste Taste 4 der zweiten Reihe ist mit der Ziffer 4, die zweite Taste 5 der zweiten Reihe der Ziffer 5 und die dritte Taste 6 der zweiten Reihe mit der Ziffer 6 belegt. Die erste Taste 7 der dritten Reihe ist mit der Ziffer 7, die zweite Taste 8 der dritten Reihe ist mit der Ziffer 8 und die dritte Taste 9 der dritten Reihe ist mit der Ziffer 9 belegt. Die erste Taste 11 der vierten Reihe ist mit dem Sonderzeichen X, die zweite Taste 10 der vierten Reihe ist mit der Ziffer 0 und die dritte Taste 12 der vierten Reihe ist mit dem Sonderzeichen "Raute" belegt.

Figur 2 zeigt ein Rundfunkgerät 35, das mit einer Rechenvorrichtung 31 über Datenleitungen 36 verbunden ist. Die Rechenvorrichtung 31 ist über Datenleitungen 36 mit der Ziffernblocktastatur 32, mit dem Speicher 33 und einer Ortsbestimmungseinrichtung 34 verbunden.

Figur 3 zeigt ein einfaches Ablaufdiagramm eines Programmes zum Betreiben des Rundfunkgeräts. Bei Programmpunkt 20 wartet die Rechenvorrichtung 31 auf eine Eingabe. Erfolgt die Eingabe der Sondertaste, die den Beginn einer Richtungsangabe anzeigt, so wird nach Programmpunkt 21 verzweigt. Bei Programmpunkt 21 wartet die Rechenvorrichtung 31 auf die Eingabe der Richtungsinformationen durch Betätigen einer der Tasten der Ziffernblocktastatur 32. Die Richtungsinformationen, die den Tasten zugeordnet sind, und die Funktionen, die den Sondertasten zugeordnet sind, sind im Speicher 33 abgelegt. Zudem sind in dem Speicher 33 die Entfernungsradien für ein- bzw. mehrmaliges Betätigen der Tasten und für die Größe des Standortbereiches 37 und die Winkelbereiche der Richtungsfächer abgelegt. Nach Eingabe einer Sondertaste springt das Programm zu Programmpunkt 22, an dem in dem gewählten Ausführungsbeispiel Verkehrshinweise nach den eingegebenen Richtungbereichen ausgewählt werden und bei Programmpunkt 23 ausgegeben werden. Abschließend springt das Programm zu Programmpunkt 20 zurück und wartet auf weitere Eingaben.

Figur 4 zeigt einen Richtungsfächer mit 100 Grad Winkelöffnung. Es sind drei Winkelbereiche 38,39,40 mit unterschiedlichen Entfernungsradien R₁, R₂ und R₃ angegeben, die durch entsprechendes ein- bzw. mehrmaliges Betätigen der entsprechenden Taste gewählt werden. Ein Kreuz bezeichnet den momentanen Standort 44. Es ist ebenfalls ein Standortbereich 37 angegeben, der immer zum ausgewählten Richtungsbereich gehört.

Figur 5 zeigt mehrere Kreisbereiche 43,42,41 mit unterschiedlichen Radien R₁, R₂ und R₃, die durch entsprechendes ein- bzw. mehrmaliges Betätigen der entsprechenden Sondertaste bestimmt werden.

Die Beschreibung eines speziellen Ausführungsbeispiels wird anhand der Figuren 1, 2, 3, 4 und 5 beschrieben.

In dem Speicher 33 ist der in Figur 2 dargestellte Programmablauf abgelegt. Weiterhin ist die Zuordnung der Tasten 1,2,3,4,6,7,8,9 der Ziffernblocktastatur 32 zu den Himmelsrichtungen bzw. die Zuordnung der zweiten Taste 5 der zweiten Reihe bzw. der Sondertasten 10,11,12 der vierten Reihe mit der Bezifferung 0, X und "Raute", die in diesem Ausführungsbeispiel Sonderfunktionen belegt sind, im Speicher 33 abgelegt.

In dem folgenden Ausführungsbeispiel wird der Sondertaste 11 die Funktion zugeordnet, daß der Rechenvorrichtung 31 bei Betätigen der Sondertaste 11 der Beginn einer Richtungseingabe angezeigt wird. Bei Betätigen der zweiten Taste 5 der zweiten Reihe führt die Rechenvorrichtung 31 eine Ortsbestimmung mithilfe der Ortsbestimmungseinrichtung 34 durch. Der Sondertaste "Raute" 12 wird die Funktion zugeordnet, der Rechenvorrichtung 31 den Abschluß einer Richtungseingabe mitzuteilen. Der Fachmann kann jedoch auch eine andere Belegung der zweiten Taste 5 der zweiten Reihe und der Tasten 10,11,12 der vierten Reihe mit den Sonderfunktionen wählen.

So ist es von Vorteil, bei Empfängern mit Traffic Message Channel (TMC) die TMC-Taste mit der Funktion zu belegen, der Rechenvorrichtung 31 den Beginn einer Richtungseingabe anzuzeigen.

Es können zwei unterschiedliche Richtungsbereiche eingegeben werden: Richtungsfächer und Richtungskreise. Durch Betätigen der Richtungstasten 1, 2, 3, 4, 6, 7, 8, 9, d.h. der Tasten der Ziffernblocktastatur 31 denen Richtungen zugeordnet sind, werden Richtungsfächer 38, 39, 40 festgelegt, die eine festgelegte Winkelöffnung von z.B. 100 Grad aufweisen. Die Richtung des Winkelfächers wird durch die Wahl der entsprechenden Taste festgelegt. Bei Betätigen der zweiten Taste 2 der ersten Reihe zum Beispiel, der die Richtung Nord im Speicher 33 zugeordnet ist, wird ein Richtungsfächer vom momentanen Standort 44 aus festgelegt, der symmetrisch nach Norden geöffnet ist und den Standortbereich 37 beinhaltet, wie in Figur 4 dargestellt.

Bei Betätigen der dritten Taste 3 der ersten Reihe zum Beispiel, der die Richtung Nord-Ost zugeordnet ist, wird ein Richtungsfächer mit festgelegter Winkelöffnung symmetrisch Richtung Nord-West vom Standort 44 aus festgelegt. Die Winkelöffnungen sind vorzugsweise zwischen 90 und 120 Grad.

Die Kreisbereiche werden über eine Sondertaste, in diesem Ausführungsbeispiel durch die zweite Taste 10 der dritten Reihe, die mit der Ziffer 0 belegt ist, eingegeben. Durch Betätigen der zweiten Taste 10 der dritten Reihe wird ein Kreisbereich um den Standort 44 festgelegt. Der Radius des Kreisbereiches wird durch ein- bzw. mehrmaliges Betätigen der zweiten Taste 10 der vierten Reihe eingegeben.

Die Eingabe einer Richtungsinformation mit Hilfe der Ziffernblocktastatur 32 erfolgt folgendermaßen:
Im Speicher 33 sind die Radien für die Kreisbereiche 41, 42, 43 und für die Richtungsfächer 38, 39, 40 und die Größe der Winkelöffnungen der Richtungsfächer 38, 39, 40 abgelegt.

In diesem Ausführungsbeispiel wird dem einmaligen Betätigen einer Taste ein Entfernungsradius von 10 Kilometern, dem zweimaligen Betätigen einer Taste ein Entfernungsradius von 50 Kilometern und dem dreimaligen Betätigen einer Taste ein Entfernungsradius von 100 Kilometern zugeordnet. Der zweiten Taste 10 der vierten Reihe wird die Funktion zugeordnet, daß als Richtungsangabe ein Kreisbereich festgelegt wird. Durch das ein- bzw. mehrmalige Betätigen der zweiten Taste 10 der vierten Reihe werden entsprechend festgelegte Kreisradien gewählt. In diesem Ausführungsbeispiel werden die Radien für die Kreisbereiche entsprechend den Radien für die Richtungsfächer gewählt. Der zweiten Taste 5 der zweiten Reihe wird die Funktion zugeordnet, die Rechenvorrichtung 31 zu veranlassen, eine Ortsbestimmung durchzuführen und den neuen Standort 44 im Speicher 33 abzulegen.

Die Ortsbestimmung wird mit Hilfe einer Ortsbestimmungseinrichtung 34 z.B. mithilfe eines Navigationssystems oder über eine Identifikation der zu empfangenen Sender wie von H. Kässer in "Senderidentifikation im Autoradio Berlin", Bosch Technische Berichte, Band 8, 1986, Seite 90 beschrieben, durchgeführt.

Ein Kreisbereich wird eingegeben, indem zuerst die erste Sondertaste 11 der vierten Reihe betätigt wird, die der Rechenvorrichtung 31, mitteilt, daß eine Richtungseingabe folgt. Dann wird durch Betätigen der zweiten Taste 5 der zweiten Reihe eine Ortsbestimmung veranlaßt und anschließend betätigt man die zweite Taste 10 der vierten Reihe ein- bzw. mehrmals, je nachdem wie groß der Radius des Kreisbereiches sein soll. Die Eingabe schließt man mit der dritten Sondertaste 12 der vierten Reihe ab, die der Rechenvorrichtung 31 mitteilt, daß die Eingabe beendet ist.

Zur Eingabe der Richtungsinformation Nord bis zu 100 Kilometern Reichweite betätigt man die erste Sondertaste 11 der vierten Reihe, dann die zweite Taste 5 der zweiten Reihe und anschließend dreimal die zweite Taste 2 der ersten Reihe und zum Abschluß der Eingabe die dritte Sondertaste 12 der vierten Reihe.

Möchte man die Richtungsinformation Süd-West mit einer Reichweite von 10 Kilometern eingeben, so betätigt man die erste Sondertaste 11, dann die zweite Taste 5 der zweiten Reihe und anschließend einmal die erste Taste 7 der dritten Reihe und zum Abschluß die dritte Sondertaste 12.

Zur Eingabe der Richtungsinformation West bis zu 500 Kilometer Reichweite betätigt man die erste Sondertaste 11, dann die zweite Taste 5 der zweiten Reihe zur Ortsbestimmung, dann viermal die dritte Taste 6 der zweiten Reihe und zum Abschluß die dritte Sondertaste 12.

Dieses Verfahren kann allgemein zur Eingabe von Richtungsinformationen verwendet werden und im besonderen zur Auswahl von Verkehrsinformationen angewendet werden. Bei der Übertragung von Verkehrshinweisen nach dem Radio-Data-System (RDS) enthalten die empfangenen Daten neben dem Verkehrshinweis noch den Ort, den der Verkehrshinweis betrifft wie von Brägas, Busch, Markus in "Übertragung von codierten Verkehrshinweisen ...", Bosch Technische Berichte, Band 8, Heft 1/2, 1986, Seite 15 ff beschrieben.

Durch die Eingabe des entsprechenden Kreisbereiches bzw. des Richtungsfächers wird die Rechenvorrichtung 31 dazu veranlaßt, die eingehenden Verkehrsinformationen im Hinblick darauf auszuwählen, ob die Informationen in dem eingegebenen Richtungsbereich liegen. Nach der Auswahl der Verkehrshinweise werden nur die Verkehrshinweise ausgegeben, die in dem gewählten Richtungsbereich liegen.

Die Auswahl einer Verkehrsinformation mit Hilfe einer Richtungseingabe wird anhand von Figur 2 erläutert.

Bei Programmpunkt 20 wartet die Recheneinheit 31 auf eine Eingabe. Nach Eingabe der ersten Sondertaste 11, springt das Programm zu Programmpunkt 21 und die Recheneinheit 31 erwartet eine Richtungseingabe. Bei Betätigen einer Taste legt die Rechenvorrichtung 31 den Richtungsbereich fest, der für die betätigte Taste im Speicher 33 abgelegt ist. Durch die Eingabe einer weiteren Sondertaste wird der Rechenvorichtung 31 mitgeteilt, daß der Eingabevorgang beendet ist.

Daraufhin wählt die Rechenvorrichtung 31 bei Programmpunkt 22 in dem gewählten Ausführungsbeispiel die Verkehrsinformationen aus, die in den gewählten Richtungsbereichen liegen und gibt diese bei Programmpunkt 23 an den Fahrer über eine optische oder eine akustische Anzeige aus. Danach wird nach Programmpunkt 20 zurückverzweigt.

## Patentansprüche

1. Verfahren zur Eingabe einer Richtungsinformation in ein Rundfunkgerät (35) und/oder Navigationsgerät mit einer Rechenvorrichtung (31), mit einem Speicher (33) und mit einer Ziffernblocktastatur (32) aus vier in Form eines Rechteckes übereinander angeordneten Tastenreihen mit je drei Tasten, wobei zur Selektion eines Richtungsbereichs den Tasten (1,2,3) der ersten Reihe und der ersten (4) und der letzten Taste (6) der zweiten Reihe und den Tasten (7,8,9) der dritten Reihe der Ziffernblocktastatur (32) Himmelsrichtungen zugeordnet werden, wobei den Tasten (11,10,12) der vierten Reihe und der zweiten Taste (5) der zweiten Reihe Sonderfunktionen zugeordnet werden, wobei nach Betätigen einer Sondertaste der Ziffernblocktastatur (32) durch Betätigen mindestens einer Taste (1,2,3,4,6,7,8,9) eine Richtungsinformation eingegeben wird, wobei durch Betätigen einer Sondertaste der Eingabevorgang der Richtungsinformation beendet wird und wobei eine Verkehrsinformation zu einem gewählten Richtungsbereich durch die Rechenvorrichtung (31) ausgewählt wird.

2. Verfahren nach Anspruch 1, **dadurch gekennzeichnet, daß** der Standort eines Rundfunkgerätes (35) vor Eingabe der Richtungsinformation durch Betätigen einer Sondertaste von einer Ortsbestimmungseinrichtung (34) mittels eines Navigationssystems oder mittels Senderidentifikation bestimmt wird.

3. Verfahren nach einem der vorhergehenden Ansprüche, **dadurch gekennzeichnet, daß** die Richtungsinformation mit einer ersten festgelegten Reichweite für die Richtung Nord durch einmaliges Betätigen der zweiten Taste (2) der ersten Reihe, für die Richtung West durch einmaliges Betätigen der ersten Taste (4) der zweiten Reihe, für die Richtung Süd durch einmaliges Betätigen der zweiten Taste (8) der dritten Reihe und für die Richtung Ost durch einmaliges Betätigen der dritten Taste (6) der zweiten Reihe eingegeben wird und daß die Eingabe durch das Betätigen einer Sondertaste abgeschlossen wird.

4. Verfahren nach einem der vorhergehenden Ansprüche **dadurch gekennzeichnet, daß** die Richtungsinformation Nord-West, Süd-West, Süd-Ost und Nord-Ost durch Betätigen der dritten Taste (3) der ersten Reihe für Nord-Ost, der dritten Taste (9) der dritten Reihe für Süd-Ost, der ersten Taste (7) der dritten Reihe für Süd-West und der ersten Taste (1) der ersten Reihe für Nord-West eingegeben wird und als Abschluß der Eingabe eine festgelegte Sondertaste betätigt wird.

5. Verfahren nach einem der vorhergehenden Ansprüche, **dadurch gekennzeichnet, daß** die Richtungsinformation für eine zweite bzw. eine dritte festgelegte Reichweite eingegeben wird, indem zuerst eine Sondertaste für die Standortbestimmung gedrückt wird und dann ein mehrmaliges Betätigen der entsprechenden Richtungstaste ausgeführt wird und zum Abschluß der Eingabe eine Sondertaste gedrückt wird.

6. Verfahren nach einem der vorhergehenden Ansprüche, **dadurch gekennzeichnet, daß** die zweite Taste (5) der dritten Reihe der Ziffernblocktastatur (32) als Sondertaste verwendet wird, bei deren Betätigung eine Standortbestimmung veranlaßt wird.

7. Verfahren nach einem der vorhergehenden Ansprüchen, **dadurch gekennzeichnet, daß** die Richtungsinformation in der Form von Kreisbereichen und/oder Richtungsfächern in Verbindung mit einer Reichweite eingegeben wird.

8. Vorrichtung zur Eingabe einer Richtungsinformation in ein Rundfunkgerät (35) und/oder Navigationsgerät mit einer Rechenvorrichtung (31) nach einem der vorhergehenden Verfahrensansprüche, wobei die Rechenvorrichtung (31) mit einem Speicher (33) und mit einer Ziffernblocktastatur (32) verbunden ist, die aus vier in Form eines Rechteckes übereinander angeordneten Tastenreihen mit je drei Tasten aufgebaut ist, wobei den Tasten (1,2,3) der ersten Reihe und der ersten (4) und der letzten Taste (6) der zweiten Reihe und den Tasten (7,8,9) der dritten Reihe der Ziffernblocktastatur (32) Himmelsrichtungen zugeordnet sind und wobei den Tasten (11,10,12) der vierten Reihe und der zweiten Taste (5) der zweiten Reihe Sonderfunktionen zugeordnet sind und wobei nach Betätigen einer Sondertaste der Ziffernblocktastatur (32) durch Betätigen einer Taste (1,2,3,4,6,7,8,9) eine Richtungsinformation eingegebbar ist und durch Betätigen einer Sondertaste die Eingabe der Richtungsinformation abschließbar ist.

9. Vorrichtung nach Anspruch 1, **dadurch gekennzeichnet, daß** das Rundfunk- und/oder Navigationsgerät mit einer Ortsbestimmungseinrichtung versehen ist.

## Claims

1. Method for input operation directional information into a radio unit (35) and/or navigational unit with a computing device (31), with a memory (33) and with a numerical block keypad (32) composed of four key rows which are arranged one on top of the other in the form of a rectangle and have three keys each, points of the compass being assigned to the keys (1, 2, 3) of the first row and to the first the key (4) and to the last key (6) of the second row, and to keys (7, 8, 9) of the third row of the numerical block keypad (32) in order to select a directional range, special functions being assigned to the keys (11, 10, 12) of the fourth row and to the second key (5) of the second row, directional information being input after activation of a special key on the numerical block keypad (32) by activating at least one key (1, 2, 3, 4, 6, 7, 8, 9), the procedure of input operation the directional information being terminated by activating a special key and traffic information relating to a selected directional range being selected by the computing device (31).

2. Method according to Claim 1, **characterized in that** the location of a radio unit (35) is determined by means of a navigation system or by means of transmitter information by activating a special key on a location-determining device (34) before the directional information is input.

3. Method according to one of the preceding claims, **characterized in that** the directional information is input with a first specified range for the northerly direction by activating once the second key (2) of the first row, for the westerly direction by activating once the first key (4) of the second row, for the southerly direction by activating once the second key (8) of the third row and for the easterly direction by activating once the third key (6) of the second row, and **in that** the input operation is concluded by the activation of a special key.

4. Method according to one of the preceding claims, **characterized in that** the directional information north-west, south-west, south-east and north-east is input by activating the third key (3) of the first row for north-east, the third key (9) of the third row for south-east, the first key (7) of the third row for south-west and the first key (1) of the first row for north-west, and a specified special key is activated to conclude the input operation.

5. Method according to one of the preceding claims, **characterized in that** the directional information is input for a second or a third specified range by firstly pressing a special key for the determination of the location and then repeated activation of the corresponding direction key is carried out and a special key is pressed to conclude the input operation.

6. Method according to one of the preceding claims, **characterized in that** the second key (5) of the third row of the numerical block keypad (32) is used as a special key whose activation causes the location to be determined.

7. Method according to one of the preceding claims, **characterized in that** the directional information is input in the form of circular regions and/or directional fans in conjunction with a range.

8. Device for input operation directional information into a radio unit (35) and/or navigational unit with a computing device (31) as claimed in one of the preceding method claims, the computing device (31) being connected to a memory (33) and to a numerical block keypad (32) composed of four key rows which are arranged one on top of the other in the form of a rectangle and have three keys each, points of the compass being assigned to the keys (1, 2, 3) of the first row and to the first key (4) and to the last key (6) of the second row, and to the keys (7, 8, 9) of the third row of the numerical block keypad (32), and special functions being assigned to the keys (11, 10, 12) of the fourth row and to the second key (5) of the second row, and it being possible, after the activation of a special key on the numerical block keypad (32), to input directional information by activating a key (1, 2, 3, 4, 6, 7, 8, 9) and to conclude the input operation of the directional information by activating a special key.

9. Device according to Claim 1, **characterized in that** the radio unit and/or navigational unit is provided with a device for determining the location.

## Revendications

1. Procédé d'introduction d'une information de direction dans un appareil radio (35) et/ou un appareil de navigation, comprenant un dispositif de calcul (31), une mémoire (33) et un clavier à touches de chiffres (32) formé de quatre rangées de touches superposées suivant un rectangle et ayant chacune trois touches, selon lequel
- pour la sélection d'une plage directionnelle on associe les directions de l'espace aux touches (1, 2, 3) de la première rangée et à la première (4) et à la dernière touche (6) de la seconde rangée ainsi qu'aux touches (7, 8, 9) de la troisième rangée du clavier (32),
- aux touches (11, 10, 12) de la quatrième rangée et à la seconde touche (5) de la seconde rangée on associe des fonctions spéciales,
- après actionnement d'une touche spéciale du clavier (32), on introduit une information de direction par l'actionnement d'au moins une touche (1,2,3,4,6,7,8,9),
- par l'actionnement d'une touche spéciale on termine l'opération d'introduction de l'information de direction, et
- on sélectionne une information de circulation pour une plage directionnelle sélectionnée par le dispositif de calcul (31).

2. Procédé selon la revendication 1,
**caractérisé en ce qu'**
on détermine l'emplacement d'un appareil radio (35) avant d'introduire l'information de direction par l'actionnement d'une touche spéciale d'une installation de localisation (34) à l'aide d'un système de navigation ou à l'aide d'une identification d'émetteur.

3. Procédé selon l'une quelconque des revendications précédentes,
**caractérisé en ce qu'**
on introduit l'information de direction avec une première portée fixée pour la direction Nord par un seul actionnement de la seconde touche (2) de la première rangée, pour la direction Ouest par un seul actionnement de la première touche (4) de la seconde rangée, pour la direction Sud par un seul actionnement de la seconde touche (8) de la troisième rangée et pour la direction Est, par un seul actionnement de la troisième touche (6) de la seconde rangée, et
on termine l'introduction par l'actionnement d'une touche spéciale.

4. Procédé selon l'une quelconque des revendications précédentes,
**caractérisé en ce qu'**
on introduit l'information de direction Nord-Ouest, Sud-Ouest, Sud-Est ou Nord-Est, par l'actionnement de la troisième touche (3) de la première rangée pour Nord-Est, de la troisième touche (9) de la troisième rangée pour Sud-Est, de la première touche (7) de la troisième rangée pour Sud-Ouest et de la première touche (1) de la première rangée pour Nord-Ouest, et on termine l'introduction par l'actionnement d'une touche spéciale fixe.

5. Procédé selon l'une quelconque des revendications précédentes,
**caractérisé en ce qu'**
on introduit l'information de direction pour une seconde ou une troisième portée fixe **en ce que** tout d'abord on actionne une touche spéciale pour déterminer l'emplacement puis on actionne plusieurs fois la touche de direction correspondante et pour terminer l'introduction on enfonce une touche spéciale.

6. Procédé selon l'une quelconque des revendications précédentes,
**caractérisé en ce que**
la seconde touche (5) de la troisième rangée du clavier de bloc de chiffres (32) est utilisée comme touche spéciale dont l'actionnement produit une localisation.

7. Procédé selon l'une quelconque des revendications précédentes,
**caractérisé en ce que**
l'information de direction est introduite sous la forme de zones circulaires et/ou d'éventails de directions en liaison avec une portée.

8. Dispositif pour l'introduction d'une information de direction dans un appareil radio (35) et/ou un appareil de navigation, comprenant un dispositif de calcul (31), selon le procédé de l'une quelconque des revendications de procédé ci-dessus,
le dispositif de calcul (31) étant relié à une mémoire (33) et à un clavier à touches de chiffres (32), formé de quatre rangées de touches superposées suivant un rectangle et ayant chacune trois touches, dans lequel,
- les touches (1, 2, 3) de la première rangée et la première touche (4) et la dernière touche (6) de la seconde rangée ainsi que les touches (7, 8, 9) de la troisième rangée du clavier (32) sont associée aux directions dans l'espace,
- les touches (11, 10, 12) de la quatrième rangée et la seconde touche (5) de la seconde rangée sont associées aux fonctions spéciales, et
- après actionnement d'une touche spéciale du clavier (32) on peut introduire par l'actionnement d'une touche (1, 2, 3, 4, 6, 7, 8, 9), une information de direction, et par l'actionnement d'une touche spéciale on termine l'introduction de l'information de direction.

9. Dispositif selon la revendication 1,
**caractérisé en ce que**
l'appareil radio et/ou de navigation est équipé d'une installation de localisation.
